# EUROPÄISCHE PATENTSCHRIFT

(11) **EP 2 479 459 B1**
(45) Veröffentlichungstag und Bekanntmachung des Hinweises auf die Patenterteilung: **23.08.2017**
(21) Anmeldenummer: 11009833.2
(22) Anmeldetag: 14.12.2011
(51) Int. Cl.: F16H 57/021, F16H 48/42

(54) **Vorrichtung zum Lagern einer Ritzelwelle eines Differenziales für Kraftfahrzeuge**
Device for providing a bearing for a pinion shaft of a differential for motor vehicles
Dispositif de stockage d'un arbre de pignon d'un différentiel pour véhicule automobile

(30) Priorität: 21.01.2011 DE 102011009101
(43) Veröffentlichungstag der Anmeldung: 25.07.2012
(73) Patentinhaber: AUDI AG, 85045 Ingolstadt (DE)
(72) Erfinder: Meixner, Christian, 85049 Ingolstadt (DE)
(74) Vertreter: Lehle, Josef

(56) Entgegenhaltungen:
- EP-A2- 0 192 339
- WO-A2-2006/020694
- DE-B3-102007 028 948
- US-A- 3 550 474
- US-A- 3 557 634
- US-A- 3 952 608

## Beschreibung

Die Erfindung betrifft ein Geschwindigkeits-Wechselgetriebe mit einer Vorrichtung zum Lagern einer Ritzelwelle eines Differenzials für Kraftfahrzeuge gemäß dem Oberbegriff des Patentanspruches 1.

Eine derartige Vorrichtung ist zum Beispiel in der US 3 952 608 Abeschrieben, bei der die axiale Vorspannung der in O-Anordnung in das Getriebegehäuse eingesetzten Kegelrollenlager mittels einer Schraubverbindung hergestellt ist, die zudem einen auf die Ritzelwelle in Umfangsrichtung formschlüssigen Anschlussflansch festlegt. Zwischen den Innenringen der Kegelrollenlager ist eine rohrförmige, einen Wellenabschnitt aufweisende Stahlfeder als Abstandshalter eingesetzt. Bei einer derartigen Lagerung der Ritzelwelle sind sehr enge Fertigungstoleranzen einzuhalten, um eine gleichmäßige Lagervorspannung über den gesamten Betriebsbereich sicherzustellen und damit verbunden eine hohe Laufruhe des Differenzials im Zug- und Schubbetrieb des Kraftfahrzeuges zu schaffen.

Aus der WO 2006/020694 A2 ist ein gattungsgemäßes Geschwindigkeits-Wechselgetriebe für Kraftfahrzeuge bekannt, in dem ein Differenzial integriert ist. Aus der EP 0 192 339 A2 ist eine Lageranordnung an einer Radnabe bekannt. Aus der US 3 557 634 A ist ein Geschwindigkeits-Wechselgetriebe mit integriertem Differenzial bekannt. Aus der DE 10 2007 028948 B3 ist ein Werkzeug zur Montage eines Maschinenelementes bekannt. Aus der US 3 550 474 A ist ein Geschwindigkeits-Wechselgetriebe mit integriertem Differenzial bekannt.

Aufgabe der Erfindung ist es, ein Geschwindigkeits-Wechselgetriebe mit einer Vorrichtung zum Lagern einer Ritzelwelle eines Differenzials für Kraftfahrzeuge vorzuschlagen, die die Einhaltung dieser Vorgaben mit geringeren Fertigungstoleranzen und geringerem Fertigungsaufwand ermöglicht.

Die Lösung dieser Aufgabe wird erfindungsgemäß mit den Merkmalen des Patentanspruches 1 erreicht. Vorteilhafte und besonders zweckmäßige Weiterbildungen der Erfindung sind Gegenstand der abhängigen Ansprüche.

Gemäß Anspruch 1 wird eine Vorrichtung zum Lagern einer Ritzelwelle eines Differenziales für Kraftfahrzeuge vorgeschlagen, wobei die das Differenzial antreibende und ein Kegelritzel aufweisende Ritzelwelle über zwei in ein Gehäuse des Differenziales eingesetzte, axial voneinander beabstandete Kegelrollenlager drehbar gelagert ist, von denen ein erstes, inneres Kegelrollenlager näher zum Antriebsritzel hin angeordnet ist als ein zweites, äußeres Kegelröllenlager. Erfindungsgemäß sind die Kegelrollenlager in einer O-Anordnung positioniert, wobei weiter vorgesehen ist, dass die Ritzelwelle Bestandteil des Geschwindigkeits-Wechselgetriebes ist und auf der Ritzelwelle, im Bereich zwischen den beiden Kegelrollenlagern, ein Antriebs-Zahnrad des Wechselgetriebes angeordnet ist, das mittels einer Schiebeverbindung auf die Ritzelwelle aufgeschoben sowie in Umfangsrichtung verdrehfest und formschlüssig gehalten ist. Weiter ist erfindungsgemäß vorgesehen, dass das Antriebs-Zahnrad über einen sich daran anschließenden und auf die Ritzelwelle aufgeschobenen Zwischenring sowie über einen sich an den Zwischenring anschließenden Innenring des äußeren Kegelrollenlagers mittels eines Federelementes gegen eine Ringschulter der Ritzelwelle vorgespannt ist, wobei das Federelement zwischen dem Innenring des äußeren Kegelrollenlagers und einem in eine Ringnut der Ritzelwelle eingesprengten Sicherungsring verspannt bzw. eingespannt ist.

Mit einem derartigen Aufbau kann auf baulich einfache und kostengünstige Weise eine schubseitige Abstützung des äußeren Kegelrollenlagers bei gleichzeitiger Verspannung und Festlegung des vorzugsweise durch ein Stirnzahnrad gebildeten Antriebs-Zahnrades des Wechselgetriebes erfolgen. Weiter hat sich überraschend herausgestellt, dass über das Federelement das für die Lageranordnung mit Kegelrollenlagern relativ hohe Vorspannmoment über den gesamten Betriebsbereich des Differenzials aufrechterhalten werden kann. Dabei muss das Federelement selbstverständlich so ausgelegt sein, dass dessen Federkraft die im Fahrbetrieb auftretenden, durch das Antriebsritzel insbesondere im Schubbetrieb ausgeübten Axialkräfte abstützen kann.

Dadurch, dass das Haltemittel für das Federelement durch einen in eine Ringnut der Ritzelwelle eingesprengten Sicherungsring gebildet ist, der dieses im vorgespannten Zustand hält, kann eine fertigungstechnisch und baulich besonders einfache Lösung zur Verfügung gestellt werden, die ohne aufwendige Gewinde- und Wellenmutterausgestaltungen auskommt.

Das Federelement mitsamt zugeordnetem Sicherungsring kann zudem, insbesondere im Vergleich zu Wellenmuttern, äußerst gewichtsgünstig hergestellt werden.

Das Federelement ist besonders bevorzugt eine im Querschnitt Ω-förmige (Omega-förmige) und/oder wellenförmige Stahlfeder mit axial vorzugsweise zu beiden Seiten abragenden Ringkragen. Eine derartige Stahlfeder ist relativ kostengünstig herstellbar, kann hohe Vorspannkräfte ausüben und benötigt in axialer Richtung besonders wenig Einbauraum.

Die Ritzelwelle ist in einem Geschwindigkeits-Wechselgetriebe mit integriertem Differenzial angeordnet, wobei einander benachbarte Stirnwände des gemeinsamen Getriebegehäuses je ein Kegelrollenlager aufnehmen und zwischen den Stirnwänden auf der Ritzelwelle das Antriebs-Stirnzahnrad des Wechselgetriebes über eine Kerbverzahnung in Umfangsrichtung formschlüssig aufgeschoben ist. Daraus resultiert eine baulich besonders günstige, wenig axialen Bauraum erfordernde und robuste Konstruktion des integrierten Differenzials mit einem zwischen den Kegelrollenlagern positioniertem Antriebs-Stirnzahnrad des Wechselgetriebes.

Dazu wird des Weiteren vorgeschlagen, dass der Differenzialraum und der Getrieberaum des Wechselgetriebes über einen Wellendichtring zwischen der den Differenzialraum begrenzenden Stirnwand und der Ritzelwelle öldicht voneinander getrennt sind, wobei das dem Antriebsritzel unmittelbar benachbarte erste, innere Kegelrollenlager im Differenzialraum und das Antriebs-Stirnzahnrad und das zweite, äußere Kegelrollenlager im Getrieberaum positioniert und unterschiedlich beölt sind.

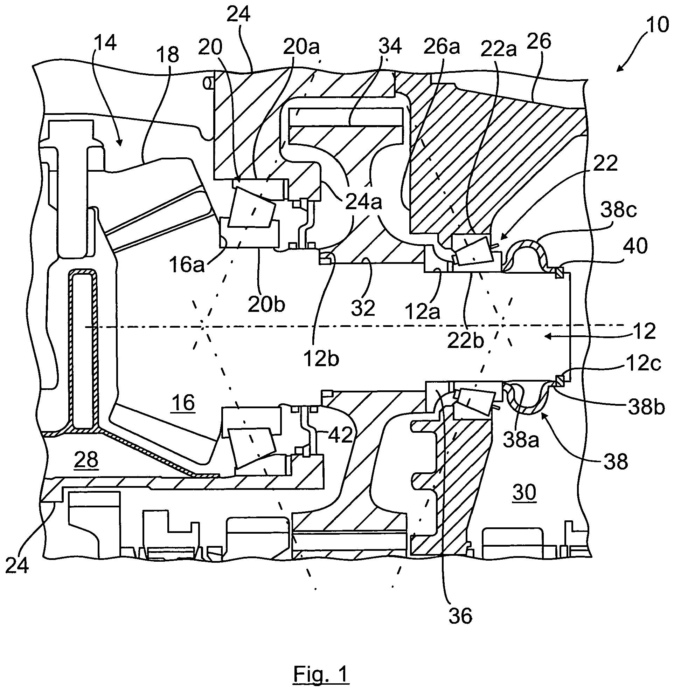

Ein Ausführungsbeispiel der Erfindung ist im Folgenden anhand der beiliegenden Zeichnung näher erläutert, die teilweise ein Geschwindigkeits-Wechselgetriebe mit integriertem Differenzial zeigt, bei dem die das Differenzial antreibende Ritzelwelle mit in O-Anordnung eingesetzten Kegelrollenlagern gelagert und mittels einer Stahlfeder und einem Sicherungsring definiert axial vorgespannt ist.

In der Zeichnung ist abschnittsweise und in einem Längsschnitt durch die Ritzelwelle 12 ein Geschwindigkeits-Wechselgetriebe 10 für Kraftfahrzeuge mit einem integrierten Differenzial 14 dargestellt, das jedoch nur soweit beschrieben ist, als dies für das Verständnis der vorliegenden Erfindung erforderlich ist.

Die Ritzelwelle 12 weist ein Kegelritzel 16 auf, das mit einem Tellerrad 18 des Differenzials 14 über zum Beispiel eine Hypoidverzahnung in Eingriff ist. Das Differenzial 14 kann im Übrigen ein übliches Kegelraddifferenzial zum Antrieb beispielsweise der Vorderräder des Kraftfahrzeuges sein.

Die Ritzelwelle 12 ist über zwei in O-Anordnung (vergleiche die eingezeichneten, strichpunktierten Wirkungslinien) ausgerichtete Kegelrollenlager 20, 22 in dem zusammengebauten Gehäuse 24, 26 bzw. an entsprechenden Stirnwänden 24a, 26a drehbar und axial unverschiebbar gelagert. Die nur teilweise ersichtlichen Gehäuse 24, 26 schließen jeweils einen Differenzialraum 28 und einen Getrieberaum 30 ein, in denen zur Schmierung der beweglichen Differenzial- und Getriebeelemente Schmieröl bevorratet ist.

Die Außenringe 20a, 22a der Kegelrollenlager 20, 22 sind in entsprechenden Lagerbohrungen der Stirnwände 24a, 26a in Belastungsrichtung axial unverschiebbar eingepresst, während die Innenringe 20b, 22b auf rotationssymmetrische Wellenabschnitte der Ritzelwelle 12 aufgepresst sind; der Innenring 20b liegt dabei an einer am Kegelritzel 16 gebildeten ersten Ringschulter 16a an.

Ferner weist die Ritzelwelle 12 eine Kerbverzahnung 32 auf, auf die ein Antriebs-Stirnzahnrad 34 des Wechselgetriebes 10 aufgepresst ist. Das Stirnzahnrad 34 ist wie ersichtlich zwischen den beiden Stirnwänden 24a, 26a angeordnet und wird über nicht weiter beschriebene Getriebeelemente des Wechselgetriebes 10 ständig angetrieben.

Des Weiteren ist an der Ritzelwelle 12 ein im Durchmesser geringerer Wellenabschnitt 12a ausgebildet, auf den eine an der Nabe des Stirnzahnrades 34 anliegende Zwischenscheibe 36 und axial anschließend der Innenring 22b des weiter von dem Kegelritzel 16 beabstandeten Kegelrollenlagers 22 aufgesetzt sind. Der Zwischenring 36 spannt die Nabe des Antriebszahnrads 34 gegen eine zweite Ringschulter 12b der Ritzelwelle 12.

Zur Bereitstellung einer definierten Lagervorspannung zwischen den Kegelrollenlagern 20, 22 über den gesamten Betriebsbereich und zur Aufnahme der Axialkomponenten gegebenenfalls von Zug- und Schubkräften aus der Hypoid- bzw. Kegelradverzahnung von Kegelritzel 16 und Tellerrad 18 ist auf den Wellenabschnitt 12a der Ritzelwelle 12 eine im Querschnitt wellenförmige Stahlfeder 38 definierter Materialstärke aufgesetzt, deren axial abragender Ringkragen 38a die zugewandte Stirnseite des Innenringes 22b beaufschlagt, während ein entgegengesetzt ausgerichteter Ringkragen 38b an einem in den Wellenabschnitt 12a in eine korrespondierende Ringnut 12c eingesprengten Sicherungsring 40 abgestützt ist.

Die Stahlfeder 38 mit ihrem halbkreisförmigen Mittelabschnitt 38c und den über gerundete Übergänge ausgerichteten Ringkragen 38a, 38b ist konstruktiv (Materialstärke, Federrate) derart ausgelegt, dass die Stahlfeder 38 über den gesamten Betriebsbereich des Wechselgetriebes 10 und des Differenziales 14 eine definierte Lagervorspannung aufrechterhält.

Zur Montage der Stahlfeder 38 auf der Ritzelwelle 12 ist ein Spannwerkzeug (nicht dargestellt) erforderlich, mittels dem die Stahlfeder 38 in axialer Richtung komprimierbar ist, bis der im Spannwerkzeug eingesetzte Sicherungsring 40 in die korrespondierende Ringnut 12c der Ritzelwelle 12 einrastet. Der Sicherungsring 38 kann insbesondere ein Seegerring sein.

Zur Abtrennung des Getrieberaumes 30 von dem Differenzialraum 28 ist ein Wellendichtring 42 eingesetzt, der in einen ringförmigen Vorsprung der Stirnwand 24a eingepresst ist und der an einem zwischen dem Innenring 20b des Kegelrollenlagers 20 und der Nabe des Stirnzahnrades 34 vorgesehenen Wellenabschnitt dicht anliegt. Daraus resultierend ist das Kegelrollenlager 20 innerhalb des Differenzialraumes 28 positioniert, während das Stirnzahnrad 34 und das zweite Kegelrollenlager 22 im Getrieberaum 30 angeordnet sind.

Die Erfindung nach den beigelegten Ansprüchen ist nicht auf das beschriebene Ausführungsbeispiel beschränkt. Anstelle der beschriebenen Stahlfeder 38 könnte zum Beispiel auch ein anderes Federmittel, zum Beispiel eine Tellerfeder oder ein Tellerfederpaket eingesetzt sein.

## Patentansprüche

1. Geschwindigkeits-Wechselgetriebe (10) für Kraftfahrzeuge, mit einem integrierten Differenzial (14), mit einer Vorrichtung zum Lagern einer Ritzelwelle (12) des Differenziales (14), wobei die das Differenzial (14) antreibende und ein Kegelritzel (16) aufweisende Ritzelwelle (12) über zwei in ein Gehäuse des Differenziales (14) eingesetzte, axial voneinander beabstandete Kegelrollenlager (20, 22) drehbar gelagert ist, von denen ein erstes, inneres Kegelrollenlager (20) näher zum Kegelritzel (16) hin angeordnet ist als ein zweites, äußeres Kegelrollenlager (22), wobei die Kegelrollenlager (20, 22) in einer O-Anordnung positioniert sind, und wobei die Ritzelwelle (12) weiter Bestandteil des Geschwindigkeits-Wechselgetriebes (10) ist und auf der Ritzelwelle (12), im Bereich zwischen den beiden Kegelrollenlagern (20, 22), ein Antriebs-Zahnrad (34) des Geschwindigkeits-Wechselgetriebes (10) angeordnet ist, das mittels einer Schiebeverbindung (32) auf die Ritzelwelle (12) aufgeschoben sowie in Umfangsrichtung verdrehfest und formschlüssig gehalten ist, wobei der Innenring (20b) des inneren Kegelrollenlagers (20) an einer am Kegelritzel (16) gebildeten ersten Ringschulter (16a) anliegt, **dadurch gekennzeichnet, dass** das Antriebs-Zahnrad (34) über einen sich daran anschließenden und auf die Ritzelwelle (12) aufgeschobenen Zwischenring (36) sowie über einen sich an den Zwischenring (36) anschließenden Innenring (22b) des äußeren Kegelrollenlagers (22) gegen eine zweite Ringschulter (12b) der Ritzelwelle (12) vorgespannt ist, und dass das Antriebs-Zahnrad (34) über den Zwischenring (36) sowie über den Innenring (22b) des äußeren Kegelrollenlagers (22) mittels eines Federelementes (38) gegen die zweite Ringschulter (12b) vorgespannt ist, wobei das Federelement (38) zwischen dem Innenring (22b) des äußeren Kegelrollenlagers (22) und einem in eine Ringnut (12c) der Ritzelwelle (12) eingesprengten Sicherungsring (40) verspannt ist, wobei einander benachbarte Stirnwände (24a, 26a) eines gemeinsamen Getriebegehäuses (24, 26) für das Geschwindigkeits-Wechselgetriebe (10) und das Differenzial (14) je eines der Kegelrollenlager (20, 22) aufnehmen, und wobei zwischen den Stirnwänden (24a, 26a) auf der Ritzelwelle (12) das Antriebs-Stirnzahnrad (34) des Wechselgetriebes (10) über eine Kerbverzahnung (32) als Schiebeverbindung in Umfangsrichtung verdrehfest und formschlüssig aufgeschoben ist.

2. Geschwindigkeits-Wechselgetriebe (10) nach Anspruch 1, **dadurch gekennzeichnet, dass** das Federelement eine im Querschnitt wellenförmige Stahlfeder (38) mit axial zu beiden Seiten abragenden Ringkragen (38a, 38b) ist.

3. Geschwindigkeits-Wechselgetriebe (10) nach Anspruch 1, **dadurch gekennzeichnet, dass** der Differenzialraum (28) und der Getrieberaum (30) des Wechselgetriebes (10) über einen Wellendichtring (42) zwischen der den Differenzialraum (28) begrenzenden Stirnwand (24a) und der Ritzelwelle (12) öldicht voneinander getrennt sind, wobei das dem Kegelritzel (16) unmittelbar benachbarte erste, innere Kegelrollenlager (20) in einem Differenzialraum (28) und das Antriebs-Zahnrad (34) sowie das zweite, äußere Kegelrollenlager (22) in einem Getrieberaum (30) positioniert sind.

## Claims

1. Speed transmission (10) for motor vehicles, with an integrated differential (14), with a device for mounting a pinion shaft (12) of the differential (14), wherein the pinion shaft (12) driving the differential (14) and comprising a bevel pinion (16) is rotatingly mounted via two tapered roller bearings (20, 22) which are inserted into a housing of the differential (14) and axially spaced apart from each other, wherein a first inner tapered roller bearing (20) is placed closer to the bevel pinion (16) than a second outer tapered roller bearing (22), wherein the tapered roller bearings (20, 22) are disposed in O-configuration, and wherein the pinion shaft (12) is further part of the speed transmission (10), and a driving gear (34) of the speed transmission (10) is arranged on the pinion shaft (12), in the area between the two tapered roller bearings (20, 22), which is pushed onto the pinion shaft (12) by a sliding connection (32) and held on the pinion shaft in circumferential direction in fixed rotative engagement and formfitting engagement, wherein the inner ring (20b) of the inner tapered roller bearing (20) rests against a first annular collar (16a) formed on the bevel pinion (16), **characterised in that** the driving gear (34) is preloaded against a second annular collar (12b) of the pinion shaft (12) via an intermediate ring (36) placed adjacent the driving gear and pushed onto the pinion shaft (12) as well as via an inner ring (22b) of the outer tapered roller bearing (22) placed adjacent the intermediate ring (36), and the driving gear (34) is preloaded against the second annular collar (12b) via the intermediate ring (36) as well as the inner ring (22b) of the outer tapered roller bearing (22) by means of a spring element (38), wherein the spring element (38) is loaded between the inner ring (22b) of the outer tapered roller bearing (22) and a locking ring (40) clamped into a ring groove (12c) of the pinion shaft (12), wherein adjacent end walls (24a, 26a) of a common transmission housing (24, 26) for the speed transmission (10) and the differential (14) each receive one of the tapered roller bearings (20, 22), and wherein between the end walls (24a, 26a) on the pinion shaft (12) the driving gear (34) of the transmission (10) is slid on via a serration (32) as sliding connection in the circumferential direction.

2. Speed transmission (10) according to claim 1, **characterised in that** the spring element is a steel spring (38) with a waved cross-section and with ring collars (38a, 38b) axially projecting to both sides.

3. Speed transmission (10) according to claim 1, **characterised in that** the differential space (28) and the transmission space (30) of the transmission (10) are separated from each other in an oil-tight manner by a shaft seal (42) between the end wall (24a) bordering the differential space (28) and the pinion shaft (12), wherein the first inner tapered roller bearing (20) immediately adjacent the bevel pinion (16) is positioned in a differential space (28), and the driving gear (34) as well as the second outer tapered roller bearing (22) is positioned in a transmission space (30).

## Revendications

1. Engrenage à changement de vitesse (10) pour des véhicules automobiles, avec un différentiel (14) intégré, avec un dispositif de logement d'un arbre de pignon (12) du différentiel (14), dans lequel l'arbre de pignon (12) entraînant le différentiel (14) et présentant un pignon conique (16) est logé de manière rotative sur deux paliers coniques à rouleaux (20, 22) espacés axialement l'un de l'autre, insérés dans un boîtier du différentiel (14), dont un premier palier conique à rouleaux (20) intérieur est agencé plus près du pignon conique (16) qu'un second palier conique à rouleaux (22) extérieur, dans lequel les paliers coniques à rouleaux (20, 22) sont positionnés dans un agencement en O, et dans lequel l'arbre de pignon (12) est en outre un constituant de l'engrenage à changement de vitesse (10), et une roue dentée d'entraînement (34) de l'engrenage à changement de vitesse (10) est agencée sur l'arbre de pignon (12) dans la zone entre les deux paliers coniques à rouleaux (20, 22), laquelle roue est enfilée à l'aide d'une liaison coulissante (32) sur l'arbre de pignon (12) ainsi qu'est maintenue sans pouvoir tourner et par complémentarité de forme dans le sens périphérique, dans lequel l'anneau intérieur (20b) du palier conique à rouleaux (20) intérieur repose contre un premier épaulement annulaire (16a) formé sur le pignon conique (16), **caractérisé en ce que** la roue dentée d'entraînement (34) est précontrainte par un anneau intermédiaire (36) enfilé sur l'arbre de pignon (12) et s'y raccordant ainsi que par un anneau intérieur (22b) du palier conique à rouleaux (22) extérieur se raccordant à l'anneau intermédiaire (36) contre un second épaulement annulaire (12b) de l'arbre de pignon (12), et **en ce que** la roue dentée d'entraînement (34) est précontrainte par l'anneau intermédiaire (36) ainsi que par l'anneau intérieur (22b) du palier conique à rouleaux (22) extérieur à l'aide d'un élément formant ressort (38) contre le second épaulement annulaire (12b), dans lequel l'élément formant ressort (38) est serré entre l'anneau intérieur (22b) du palier conique à rouleaux (22) extérieur et un anneau de fixation (40) enfoncé dans une rainure annulaire (12c) de l'arbre de pignon (12), dans lequel des parois avant (24a, 26a) contiguës l'une à l'autre d'un boîtier d'engrenage (24, 26) commun pour l'engrenage à changement de vitesse (10) et le différentiel (14) reçoivent chacune l'un des paliers coniques à rouleaux (20, 22), et dans lequel la roue dentée avant d'entraînement (34) de l'engrenage à changement (10) est enfilée sans pouvoir tourner et par complémentarité de formes dans le sens périphérique entre les parois avant (24a, 26a) sur l'arbre de pignon (12) par une denture à cannelures (32) comme liaison coulissante.

2. Engrenage à changement de vitesse (10) selon la revendication 1, **caractérisé en ce que** l'élément formant ressort est un ressort en acier (38) présentant une section transversale ondulée avec des collets annulaires (38a, 38b) dépassant axialement des deux côtés.

3. Engrenage à changement de vitesse (10) selon la revendication 1, **caractérisé en ce que** l'espace de différentiel (28) et l'espace d'engrenage (30) de l'engrenage à changement (10) sont séparés de manière étanche à l'huile l'un de l'autre par un anneau étanche ondulé (42) entre la paroi avant (24a) délimitant l'espace de différentiel (28) et l'arbre de pignon (12), dans lequel le premier palier conique à rouleaux (20) intérieur contigu directement au pignon conique (16) est positionné dans un espace de différentiel (28) et la roue dentée d'entraînement (34) ainsi que le second palier conique à rouleaux (22) extérieur sont positionnés dans un espace d'engrenage (30).
